Europäisches Patentamt

European Patent Office

Office européen des brevets

(11) Numéro de publication: **0 255 177 B1**

(12) **FASCICULE DE BREVET EUROPEEN**

(45) Date de publication de fascicule du brevet:
24.04.91

(51) Int. Cl.5: **G06F 15/68**, G06F 15/70

(21) Numéro de dépôt: **87201400.6**

(22) Date de dépôt: **21.07.87**

(54) **Procédé d'extraction automatique d'un objet contrasté dans une image numérique.**

(30) Priorité: **30.07.86 FR 8611031**

(43) Date de publication de la demande:
**03.02.88 Bulletin 88/05**

(45) Mention de la délivrance du brevet:
**24.04.91 Bulletin 91/17**

(84) Etats contractants désignés:
**DE FR GB IT SE**

(56) Documents cités:

**COMPUTER VISION, GRAPHICS, AND IMAGE PROCESSING, vol. 30, no. 2, mai 1985, pages 125-147, Academic Press, Inc., New York, US; J. KITTLER et al.: "Threshold selection based on a simple image statistic"**

**BULLETIN DE L'ASSOCIATION SUISSE DES ELECTRICIENS, vol. 70, no. 11, 9 juin 1979, pages 532-536, Zürich, CH; J.-M. ZURCHER: "Extraction de contours en traitement électronique des images II: Processeur spécialisé pour signal vidéo"**

(73) Titulaire: **TRT TELECOMMUNICATIONS RADIOELECTRIOUES ET TELEPHONIOUES**
**88 rue Brillat Savarin**
**F-75013 Paris(FR)FR**

Titulaire: **N.V. Philips' Gloeilampenfabrieken**
**Groenewoudseweg 1**
**NL-5621 BA Eindhoven(NL)DE GB IT SE**

(72) Inventeur: **Herby, Gérard Société Civile S.P.I.D.**
**209, rue de l'Université**
**F-75007 Paris(FR)**
Inventeur: **Legall, Serge Société Civile S.P.I.D.**
**209, rue de l'Université**
**F-75007 Paris(FR)**

(74) Mandataire: **Pinchon, Pierre et al**
**Société Civile S.P.I.D. 156, Boulevard Haussmann**
**F-75008 Paris(FR)**

## Description

La présente invention concerne un procédé d'extraction automatique d'un objet contrasté dans une image numérique. Dans la suite de ce mémoire, on entendra par objet contrasté un objet qui, dans la bande de fréquence considérée, présente une intensité supérieure ou inférieure à l'intensité moyenne du fond dans lequel il est placé.

Le problème technique à résoudre par tout procédé d'extraction automatique d'un objet contrasté dans une image numérique est de permettre l'extraction dudit objet contrasté, du fond dans lequel il est placé, avec une probabilité de détection la plus grande et une probabilité de fausse alarme la plus faible possible. Pour cela, il est nécessaire, en particulier, d'estimer avec le maximum de précision le fond en chacun des éléments de l'image, notamment en ceux des éléments de l'image qui composent l'objet à extraire, de façon à distinguer dans le signal vidéo correspondant les contributions respectives de l'objet lui-même et du fond, par hypothèse inconnu. Puis, lorsque le fond a été évalué, il faut encore apprécier si la différence entre le signal vidéo en un élément d'image et la valeur du fond associé est suffisamment significative pour que cet élément d'image puisse être considéré comme appartenant à l'objet à extraire. En ce sens, une solution au problème technique mentionné plus haut est donnée dans l'article "Autothreshold-Autoscreener/FLIR System" présenté à NEACON 78 et publié par IEEE CH 1336-7/78/0000 pp. 1180-1185. Ce document de l'état de la technique décrit, en effet, un procédé d'extraction automatique d'un objet contrasté dans une image numérique qui consiste notamment à estimer en chaque élément d'image une valeur du fond. Cette estimation fait intervenir un premier seuil représentatif d'un contraste local de l'image, proportionnel à la moyenne horizontale des valeurs absolues des différences des signaux vidéo des éléments d'image situés sur la ligne de l'élément d'image considéré et des signaux vidéo des éléments d'image correspondants situés sur la ligne précédente. Ce seuil d'estimation du fond dépend donc de la ligne de l'élément d'image considéré et doit être réactualisé en permanence ligne par ligne. La valeur du fond estimé en chaque élément d'image est alors évaluée de façon différente selon le résultat de la comparaison audit seuil d'estimation du fond d'une fonction de contraste local qui, dans le procédé connu, est une différence verticale entre les signaux vidéo de l'élément d'image considéré et de l'élément d'image situé immédiatement au-dessus. Si, en cas de fort contraste, la fonction de contraste local est supérieure au seuil d'estimation du fond, le fond estimé pour l'élément d'image considéré est pris égal au fond estimé en un élément d'image situé en plus proche voisin, selon un processus dit de propagation unidirectionnel du fond. Par contre, lorsque le contraste est faible, la fonction de contraste local est inférieure au seuil d'estimation du fond, et le fond estimé pour l'élément d'image considéré est pris égal à une moyenne pondérée du signal vidéo en l'élément d'image considéré et du fond estimé en un élément d'image situé en plus proche voisin. Puis, après estimation du fond, la différence entre le signal vidéo et le fond estimé est comparée à un deuxième seuil, dit seuil de décision, de façon à décider si l'élément d'image considéré est un élément d'image potentiel de l'objet à extraire. Le seuil de décision donné dans le document de l'état de la technique précité est proportionnel à la moyenne horizontale des valeurs absolues des différences des fonds estimés pour des éléments d'image situés sur la ligne de l'élément d'image considéré et des fonds estimé pour les éléments d'images correspondants situés sur la ligne précédente.

Cependant, la solution au problème technique posé fournie par le document de l'état de la technique présente l'inconvénient que, dans certains cas, le fond estimé pour l'élément d'image considéré peut être surévalué, introduisant en cela une erreur dans la décision finale de savoir si l'élément d'image considéré appartient ou non à l'objet à extraire. En effet, lorsque l'élément d'image considéré et ses plus proches voisins sont situés dans une zone dudit objet à extraire présentant un niveau de signal vidéo peu contrasté, la fonction de contraste local prend une valeur très faible, voire nulle, inférieure au seuil d'estimation du fond. Comme indiqué précédemment, la valeur estimée du fond pour l'élément d'image considéré est alors prise égale à une combinaison linéaire du fond estimé en un élément d'image voisin et du signal vidéo de l'élément d'image considéré, ce qui conduit à une surestimation du fond et à une propagation de cette erreur, compte tenu de l'aspect récursif de la méthode. Le fond étant surévalué, la différence entre le signal vidéo et le fond est par conséquent éventuellement sous-estimée au point d'être inférieure au seuil de décision, et l'élément d'image considéré, bien qu'appartenant à l'objet à extraire, n'est donc pas reconnu comme tel.

D'autre part, le procédé connu de l'état de la technique présente également l'inconvénient que le fond estimé en un élément d'image donné est fonction d'un seul fond précédemment estimé en un élément d'image voisin unique. En d'autres termes, la propagation du fond n'est qu'unidirectionnelle, sans prendre en compte le fond estimé pour d'autres éléments d'image voisins. De plus, la fonction de contraste local est aussi unidirectionnelle (verticale dans le cas qui nous intéresse).

Enfin, un autre inconvénient du procédé connu réside dans le fait qu'il exige une réactualisation fréquente, ligne par ligne, du seuil d'estimation du fond et du seuil de décision.

Le problème technique général à résoudre par la présente demande est de proposer un procédé d'extraction automatique d'un objet contrasté dans un signal vidéo d'une image numérique, consistant notamment, d'une part, à estimer en chaque élément d'image une valeur du fond, cette estimation faisant intervenir un premier seuil, dit seuil d'estimation du fond, représentatif d'un contraste de l'image, permettant d'affecter à l'élément d'image considéré un fond estimé de façon différente selon le résultat de la comparaison audit premier seuil d'une fonction de contraste local calculée pour l'élément d'image considéré, et, d'autre part, à comparer en chaque élément d'image la différence entre le signal vidéo et le fond estimé à un deuxième seuil, dit seuil de décision, également représentatif d'un contraste de l'image afin de décider si l'élément d'image est un élément d'image potentiel de l'objet à extraire, procédé grâce auquel on obtient une estimation plus précise du fond en chaque élément d'image, et ceci à l'aide d'une fonction de contraste local mieux adaptée qui, notamment, ne conduit pas à une surévaluation du fond dans les zones peu contrastées de l'objet à extraire. Dans un mode particulier de mise en oeuvre, on cherchera à affecter à l'élément d'image considéré un fond estimé à partir des fonds évalués pour des groupes d'éléments d'image voisins de façon à réaliser une propagation multidirectionnelle du fond. Enfin, un mode plus particulier de mise en oeuvre veillera à éviter une réactualisation trop fréquente des seuils d'estimation du fond et de décision.

La solution au problème technique général à résoudre consiste, selon la présente invention, en ce que ladite fonction de constraste local, dit gradient récursif, est calculée proportionnellement à la valeur absolue de la différence d'une moyenne des signaux vidéo d'éléments d'image situés sur une ligne postérieure à la ligne sur laquelle est situé l'élément d'image considéré et d'une fonction de moyennes de fonds estimés en des éléments d'image situés sur au moins une ligne identique ou antérieure à la ligne sur laquelle est situé l'élément d'image considéré.

La fonction de contraste local selon l'invention se présente donc schématiquement comme une différence entre des signaux vidéo et des fonds estimés, pris en des éléments d'image voisins. Cette fonction convient très bien au problème posé, notamment lorsque les éléments d'image pris en compte se trouvent dans une zone peu contrastée de l'objet à extraire. Dans ce cas en effet, la fonction de contraste local prend une valeur relativement élevée, supérieure au seuil d'estimation du fond, ce qui conduit à interpréter l'élément d'image considéré comme appartenant à l'objet à extraire plutôt qu'au fond et donc à lui affecter une valeur de fond indépendante du signal vidéo en cet élément d'image. Plus précisément, dans le mode particulier de mise en oeuvre, il est prévu que, d'une part, si ledit gradient récursif est supérieur au seuil d'estimation du fond, le fond estimé pour l'élément d'image considéré est exprimé en fonction des moyennes des fonds estimés utilisées dans le calcul du gradient récursif, et, d'autre part, si ledit gradient récursif est inférieur au seuil d'estimation du fond, le fond estimé pour l'élément d'image considéré est pris égal à une combinaison linéaire du signal vidéo de l'élément d'image considéré et des moyennes des fonds estimés utilisées dans le calcul du gradient récursif. Ainsi, on obtient une estimation du fond qui dépend des fonds estimés en plusieurs éléments d'image voisins et non d'un seul, d'où la possibilité d'estimer le fond selon plusieurs directions, dites de propagation du fond. A titre d'exemple, on envisage que ledit gradient récursif est calculé, d'une part, à gauche à l'aide au moins d'une moyenne des fonds estimés en des éléments d'image dits à gauche, c'est à dire antérieurs à l'élément d'image considéré et situés sur la même ligne, et, d'autre part, à droite à l'aide au moins d'une moyenne des fonds estimés en des éléments d'image dits à droite, c'est à dire postérieurs à l'élément d'image considéré et situés sur la même ligne, et en ce que, chacun des gradients récursifs à gauche et à droite définissant respectivement un fond estimé par la gauche et un fond estimé par la droite, le fond final estimé pour l'élément d'image considéré est pris égal à celui de ces deux fonds estimés par la gauche et par la droite qui présente la plus petite différence en valeur absolue avec le signal vidéo de l'élément d'image considéré.

Enfin, dans le mode plus particulier de mise en oeuvre destiné à éviter la réactualisation ligne par ligne des seuils d'estimation du fond et de décision, on prévoit que, l'image étant divisée en sousimages se recouvrant au plus partiellement, le seuil d'estimation du fond et le seuil de décision sont proportionnels à une fonction des moyennes dans chaque sous-image d'une grandeur caractéristique du contraste en chacun des éléments d'image de la sous-image considérée.

Un autre avantage de cette disposition est que les deux seuils d'estimation du fond et de décision sont calculés simultanément à partir de la même moyenne statistique.

La description qui va suivre, en regard des dessins annexés donnés à titre d'exemples non limitatifs, fera bien comprendre en quoi consiste l'invention et comment elle peut être réalisée.

La figure 1 montre une portion de trame d'une image numérique, centrée autour d'un élément d'image considéré.

La figure 2 montre une partition de l'image numérique en sous-images secondaires.

La figure 3 est un schéma en blocs-diagramme d'un dispositif de mise en oeuvre du procédé selon l'invention.

La figure 4 illustre graphiquement un résultat expérimental obtenu par la Demanderesse à l'aide du procédé selon l'invention.

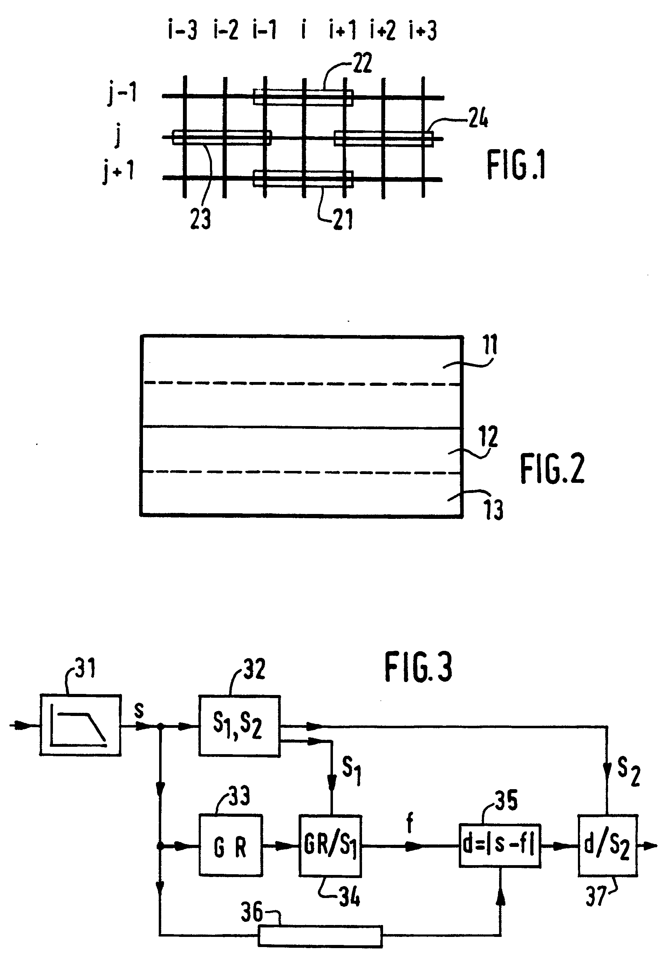

La figure 1 représente une portion de trame d'une image numérique dont on veut extraire de façon automatique un objet contrasté qu'elle contient, cette extraction étant réalisée à l'aide d'un procédé qui consiste notamment, dans un premier temps, à estimer en chaque élément d'image $(i,j)$ une valeur du fond $f(i,j)$. Dans ce but, il est nécessaire de définir un premier seuil $S_1$, dit seuil d'estimation du fond, représentatif d'un contraste de l'image, permettant d'affecter à l'élément d'image $(i,j)$ un fond $f(i,j)$ estimé de façon différente selon le résultat de la comparaison audit seuil $S_1$ d'estimation du fond, d'une fonction de contraste local $GR(i,j)$ calculée pour l'élément d'image considéré $(i,j)$. De façon à ne pas être obligé de réactualiser en permanence le seuil $S_1$ d'estimation du fond, celui-ci est défini sur l'ensemble de l'image de la façon suivante : ainsi que le montre la figure 2, l'image est d'abord divisée, par exemple, en 3 sous-images 11, 12, 13 se recouvrant partiellement, ici par moitié. Puis, en chaque élément d'image $(i,j)$ de chaque sous-image $k$ $(k = 1,2,3)$, on calcule une grandeur $C_k(i,j)$ caractéristique du contraste de l'image. Cette grandeur $C_k(i,j)$ peut être prise égale à la valeur absolue du résultat de la convolution en $(i,j)$ de l'image numérique par l'opérateur gradient horizontal du type Sobel :

$$H = \begin{vmatrix} -1 & 0 & 1 \\ -2 & 0 & 2 \\ -1 & 0 & 1 \end{vmatrix}$$

ou par l'opérateur vertical équivalent :

$$V = \begin{vmatrix} -1 & -2 & -1 \\ 0 & 0 & 0 \\ 1 & 2 & 1 \end{vmatrix}$$

ou encore à la plus grande de ces valeurs absolues ou à leur moyenne. Les opérateurs H et V précités sont appliqués au signal vidéo $s(i,j)$ dans filtrage ou après un filtrage passe-bas à l'aide d'un autre opérateur de convolution ayant la forme suivante :

$$(1/16) \begin{vmatrix} 1 & 2 & 1 \\ 2 & 4 & 2 \\ 1 & 2 & 1 \end{vmatrix}$$

Ensuite, dans chaque sous-image $k$, on calcule la moyenne $m_k$ des valeurs de la grandeur $C_k(i,j)$ pour tous les éléments $(i,j)$ contenus dans la sous-image $k$ :

$$m_k = (1/N) \sum_{i,j} C_k(i,j)$$

N étant le nombre d'éléments d'image par sous-image.

Enfin, on calcule une valeur globale M pour toute l'image à partir des moyennes partielles $m_k$. On peut prendre, par exemple, pour M la plus grande des moyennes partielles $m_k$ :

$$M = Sup\ (m_k)$$

On pourrait aussi prendre pour valeur de M la moyenne simple des $m_k$ ou toute autre combinaison.

La moyenne M étant ainsi définie et calculée, le seuil $S_1$ d'estimation du fond est choisi proportionnel à cette moyenne M :

$$S_1 = k_1 M$$

$k_1$ étant une constante déterminée statistiquement.

La fonction de contraste local $GR(i,j)$ utilisée pour l'estimation du fond $f(i,j)$ en l'élément d'image $(i,j)$ est un gradient, dit gradient récursif, proportionnel à la valeur absolue de la différence entre une moyenne $MV(j+1)$ des signaux vidéo (préfiltrés ou non) d'éléments d'image situés sur une ligne $j+1$ postérieure à la ligne $j$ de l'élément d'image considéré et d'une moyenne $MF\ (j;j-1)$ de moyennes $MF$ $(j)$, $MF$ $(j-1)$ des fonds estimés en des éléments d'image situés sur, au moins, une ligne identique $j$ ou antérieure $j-1$ à la ligne $j$ considérée. Par exemple, se référant à la figure 1, on peut prendre pour calculer $MV\ (j+1)$ les 3 éléments d'image à l'intérieur du bloc 21 et faire la moyenne pondérée de leur signal vidéo respectif, soit :

$$MV(j+1) = s(i-1,j+1) + 2s(i,j+1) + s(i+1,j+1)$$

De même, pour le calcul de MF (j-1) on peut choisir les éléments d'image du bloc 22, ce qui donne :

$$MF(j-1) = f(i-1,j-1) + 2f(i,j-1) + f(i+1,j-1)$$

Si on se contente des fonds estimés sur la ligne précédente, on a :

$$MF(j;j-1) = MF(j-1) \text{ et :}$$
$$GR(i,j) = |MV(j+1)-MF(j;j-1)| = |MV(j+1)-MF(j-1)|$$

Mais on peut également calculer une moyenne de fonds MF(j) à partir des fonds estimés en des éléments d'image situés sur la même ligne j que l'élément d'image considéré, ce sont les éléments d'image contenus dans les blocs 23 et 24 de la figure 1. A titre d'exemple, MF(j) est évaluée à partir des éléments du bloc 23 (dits à gauche) à l'aide de la formule :

$$MF(j) = f(i-3,j) + f(i-2,j) + 2f(i-1,j)$$

Disposant alors des moyennes de fonds estimés MF (j) et MF (j-1), on calcule MF (j;j-1) comme une moyenne simple ou pondérée de MF(j) et MF (j-1), et en particulier en choisissant celles des deux moyennes MF(j), MF(j-1) qui minimise la différence MV-MF, on obtient :

$$GR(i,j) = Inf[|MV(j+1)-MF(j)|,|MV(j+1)-MF(j-1)|]$$

Ayant défini la fonction de contraste local GR(i,j) et le seuil $S_1$ d'estimation de fond, il est possible d'effectuer une estimation du fond f(i,j) par comparaison de ces deux grandeurs.

Si le gradient récursif GR(i,j) est supérieur au seuil $S_1$, le fond f(i,j) estimé pour l'élément d'image considéré (i,j) est exprimé en fonction des moyennes MF(j) et MF(j-1) des fonds estimés utilisées précédemment pour le calcul du gradient récursif GR(i,j). En particulier, le fond estimé f(i,j) recherché peut être pris égal à celle des deux moyennes MF(j) et MF(j-1) qui présente la plus grande différence en valeur absolue avec le signal vidéo s(i,j) de l'élément d'image considéré s(i,j).

Si le gradient récursif GR(i,j) est inférieur au seuil $S_1$, le fond f(i,j) estimé pour l'élément d'image (i,j) est pris égal à une combinaison linéaire du signal vidéo s(i,j) et des moyennes MF(j) et MF(j-1) définies plus haut. Dans un exemple particulier de mise en oeuvre, on pourra prendre pour fond f(i,j) la moyenne entre le signal vidéo s(i,j) et celles des moyennes MF(j) et MF(j+1) qui présente la plus petite différence en valeur absolue avec le signal vidéo s(i,j).

Il a été suggéré précédemment que la moyenne MF(j) pouvait être calculée à partir des éléments d'image situés à gauche ou à droite de l'élément d'image considéré. De par la méthode même d'estimation du fond, il en résulte que deux types d'estimation du fond sont possibles, l'une dite par la gauche et l'autre dite par la droite, consistant en une propagation du fond par la gauche ou par la droite. Or, une estimation unique du fond (par la gauche ou par la droite) peut dans certains cas conduire à des erreurs importantes entre le fond ainsi estimé et le fond réel. C'est le cas notamment lorsque le fond à gauche et à droite de l'objet à extraire présente des niveaux vidéo très différents. C'est pourquoi il est préférable de calculer le gradient récursif GR(i,j), d'une part à gauche GRG(i,j) à l'aide d'une moyenne MFG(j) des fonds estimés en des éléments d'image situés à gauche de l'élément d'image considéré et, d'autre part, à droite GRD(i,j) à l'aide d'une moyenne MFD(j) des fonds estimés en des éléments d'image situés à droite de l'élément d'image considéré. Par exemple, on aura :

$$GRG(i,j) = Inf[|MV(j+1)-MFG(j)|,|MV(j+1)-MF(j-1)|]$$
$$\text{et } GRD(i,j) = Inf[|MV(j+1)-MFD(j)|,|MV(j+1)-MF(j-1)|]$$
$$\text{avec } MFG(j) = f(1-3,j)+f(i-2,j)+2f(i-1,j)$$
$$\text{et } MFD(j) = 2f(i+1,j)+f(i+2,j)+f(i+3,j)$$

Le gradient récursif à gauche, par exemple, peut aussi être calculé à l'aide de la moyenne MFG(j-1) de fond à gauche à la ligne j-1 et de la moyenne MV(j) des signaux vidéo sur la ligne j :

$$GRG(i,j) = Inf[|MV(j)-MFG(j)|,|MV(j)-MFG(j-1)|]$$

Ces deux gradients récursifs GRG(i,j) et GRD(i,j) permettent de définir respectivement un fond estimé par la gauche fg(i,j) et un fond estimé par la droite fd(i,j). Le fond final f(i,j) estimé est alors pris égal à celui de ces deux fonds estimés par la gauche et par la droite qui présente la plus petite différence en valeur absolue avec le signal vidéo s(i,j) de l'élément d'image considéré.

La méthode d'estimation du fond précédemment décrite repose sur le calcul d'un gradient récursif qui exige une initialisation. Dans ce but, on prendra comme valeurs des fonds estimés pour les éléments d'image situés sur les premières lignes et les premières et dernières colonnes de l'image les valeurs du signal vidéo en ces mêmes éléments d'image. En d'autres termes, on admettra que les premières lignes et les premières et dernières colonnes ne contiennent que du fond et non l'objet à extraire.

Dans une deuxième grande étape, après celle de l'estimation du fond f(i,j), le procédé prosodé consiste à comparer la différence d(i,j) entre le signal vidéo s(i,j) (préfiltré ou non) et le fond estimé f(i,j) à un deuxième seuil $S_2$, dit seuil de décision. Ce seuil $S_2$ est, comme le seuil $S_2$ d'estimation du fond, proportionnel à la moyenne M définie plus haut :

$$S_2 = k_2 M$$

$k_2$ étant également une constante déterminée de façon statistique. Dans la pratique, $k_2$ sera plus petit que $k_1$.

Si la différence d(i,j) est supérieure au seuil $S_2$ de décision, l'élément d'image (i,j) est considéré comme étant un élément d'image potentiel de l'objet à extraire. Par contre, si d(i,j) est inférieure à $S_2$, l'élément d'image correspondant n'est pas pris en compte.

La figure 3 montre sous forme de schéma un dispositif de mise en oeuvre du procédé d'extraction décrit en regard des figures 1 et 2. Le niveau vidéo d'entrée est d'abord préfiltré à l'aide d'un filtre passe-bas 31.

Le signal vidéo ainsi préfiltré s(i,j) est ensuite utilisé pour calculer, d'une part, en 32 les deux seuils $S_1$ et $S_2$ et, d'autre part, en 33 le gradient récursif GR(i,j). A l'aide d'un comparateur 34, le gradient récursif GR(i,j) est comparé au seuil $S_1$ d'estimation du fond. Le résultat de cette comparaison permet d'évaluer une valeur du fond estimé f(i,j). En 35 est effectuée la différence d(i,j) entre le signal vidéo s(i,j) retardé par une ligne à retard 36 et le fond estimé f(i,j). Un deuxième comparateur 37 compare la valeur absolue de la différence d(i,j) au seuil $S_2$ de décision, le résultat de cette comparaison fournit un signal binaire de sortie, 1 ou 0 selon que l'élément d'image considéré est reconnu ou non comme appartenant à l'objet à extraire.

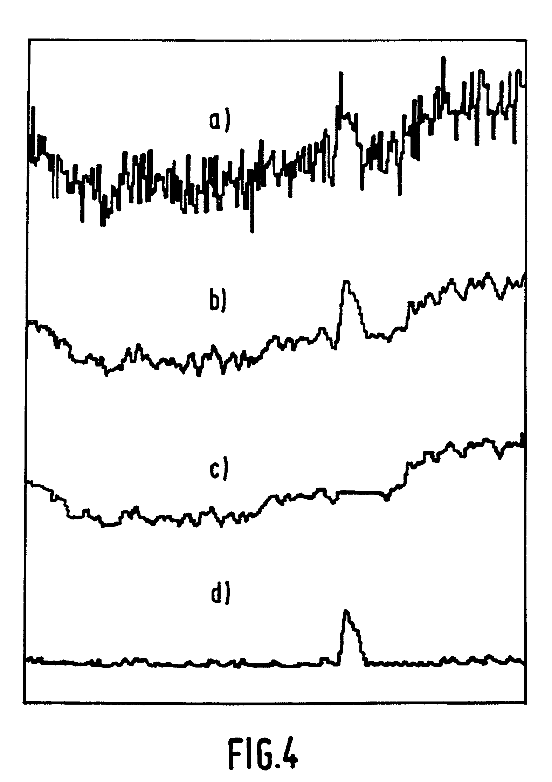

La figure 4 fournit un exemple expérimental d'extraction d'un objet contrasté dans une image numérique obtenu par la Demanderesse à l'aide du procédé selon l'invention. Il s'agit ici d'une représentation unidimensionnelle suivant une ligne ou une colonne intersectant l'objet à extraire. En a) est montré le niveau vidéo initial à partir duquel on obtient le signal préfiltré s(i,j) donné en b). Le fond estimé f(i,j) est fourni en c). Enfin, la différence entre le signal préfiltré et le fond estimé est représenté en d).

**Revendications**

1. Procédé d'extraction automatique d'un objet contrasté dans un signal vidéo (s(i,j)) d'une image numérique, consistant notamment, d'une part, à estimer (32, 33, 34) en chaque élément d'image (i,j) une valeur du fond (f(i,j)), cette estimation faisant intervenir un premier seuil ($S_1$), dit seuil d'estimation du fond, représentatif d'un contraste de l'image, permettant d'affecter à l'élément d'image considéré (i,j) un fond (f(i,j)) estimé de façon différente selon le résultat de la comparaison (34) audit premier seuil ($S_1$) d'une fonction de contraste local (GR(i,j)) calculée (33) pour l'élément d'image considéré (i,j), et, d'autre part, à comparer (35, 37) en chaque élément d'image (i,j) la différence (d(i,j)) entre le signal vidéo s(i,j) et le fond estimé (f(i,j)) à un deuxième seuil ($S_2$), dit seuil de décision, également représentatif d'un contraste de l'image, afin de décider si l'élément d'image (i,j) est un élément d'image potentiel de l'objet à extraire, caractérisé en ce que ladite fonction de contraste local (GR(i,j)), dit gradient récursif, est calculée (33) proportionnellement à la valeur absolue de la différence d'une moyenne (MV (j + 1)) des signaux vidéo d'éléments d'image (21) situés sur une ligne (j + 1) postérieure à la ligne sur laquelle est situé l'élément d'image considéré (i,j) et d'une fonction (MF(j;j-1)) de moyennes (MF(j);MF(j-1)) des fonds estimés en des éléments d'image (23, 24 ou 22) situés sur au moins une ligne identique (j) ou antérieure (j-1) à la ligne (j) sur laquelle est situé l'élément d'image considéré (i,j).

2. Procédé selon la revendication 1, caractérisé en ce que, d'une part, si ledit gradient récursif (GR(i,j)) est supérieur au seuil ($S_1$) d'estimation du fond, le fond (f(i,j)) estimé pour l'élément d'image considéré (i,j) est exprimé en fonction des moyennes (MF(j);MF(j-1)) des fonds estimés utilisées dans le calcul du gradient récursif, et, d'autre part, si ledit gradient récursif (GR(i,j)) est inférieur au seuil ($S_1$) d'estimation du fond, le fond (f(i,j)) estimé pour l'élément d'image considéré (i,j) est pris égal à une combinaison linéaire du signal vidéo (s(i,j)) de l'élément d'image considéré (i,j) et des moyennes (MF(j);MF(j-1)) des fonds estimés utilisées dans le calcul du gradient récursif.

3. Procédé selon la revendication 2, caractérisé en ce que, si le gradient récursif (GR(i,j)) est supérieur au seuil ($S_1$) d'estimation du fond, le fond (f(i,j)) estimé pour l'élément d'image considéré (i,j) est pris égal à celle desdites moyennes (MF(j);MF(j-1)) des fonds estimés que présente la plus grande différence en valeur absolue avec le signal vidéo (s(i,j)) de l'élément d'image considéré.

4. Procédé selon l'une des revendications 2 ou 3, caractérisé en ce que, si le gradient récursif $(GR(i,j))$ est inférieur au seuil $(S_1)$ d'estimation du fond, le fond $(f(i,j))$ estimé pour l'élément d'image considéré $(i,j)$ est pris égal à la moyenne entre le signal vidéo $(s(i,j))$ de l'élément d'image considéré et celle desdites moyennes $(MF(j);MF(j-1))$ des fonds estimés qui présente la plus petite différence en valeur absolue avec le signal vidéo $(s(i,j))$ de l'élément d'image considéré.

5. Procédé selon l'une quelconque des revendications 2 à 4, caractérisé en ce que ledit gradient récursif est calculé, d'une part, à gauche $(GRG(i,j))$ à l'aide au moins d'une moyenne $(MFG(j))$ des fonds estimés en des éléments d'image dits à gauche, c'est à dire antérieurs à l'élément d'image considéré $(i,j)$ et situés sur la même ligne $(j)$, et, d'autre part, à droite $(GRD(i,j))$ à l'aide au moins d'une moyenne $(MFD(j))$ des fonds estimés en des éléments d'image dits à droite, c'est à dire postérieurs à l'élément d'image considéré $(i,j)$ et situés sur la même ligne $(j)$, et en ce que, chacun des gradients récursifs à gauche $(GRG(i,j))$ et à droite $(GRD(i,j))$ définissant respectivement un fond estimé par la gauche $(fg(i,j))$ et un fond estimé par la droite $(fd(i,j))$, le fond final estimé pour l'élément d'image considéré $(i,j)$ est pris égal à celui de ces deux fonds estimés par la gauche et par la droite qui présente la plus petite différence en valeur absolue avec le signal vidéo $(s(i,j))$ de l'élément d'image considéré $(i,j)$.

6. Procédé selon l'une des revendications 1 à 5, caractérisé en ce que l'initialisation du calcul dudit gradient récursif $(GR,GRG,GRD)$ est effectuée en prenant comme valeur des fonds estimés pour les éléments d'image situés sur les premières lignes et les premières et dernières colonnes de l'image, les valeurs du signal vidéo en ces mêmes éléments d'image.

7. Procédé selon l'une des revendications 1 à 6, caractérisé en ce que, l'image étant divisée en n sous-images se recouvrant au plus partiellement, le seuil $(S_1)$ d'estimation du fond et le seuil $(S_2)$ de décision sont proportionnels à une moyenne $(M)$ sur ces n sous-images de moyennes $(m_k, k = 1,...,n)$ dans chaque sous-image $(k)$ d'une grandeur caractéristique $(C_k(i,j))$ du contraste en chacun des éléments d'image $(i,j)$ de la sous-image considérée $(k)$.

8. Procédé selon l'une des revendications 1 à 7, caractérisé en ce que le signal vidéo $(s(i,j))$

considéré est le niveau vidéo d'entrée préfiltré à l'aide d'un filtre numérique passe-bas (31).

## Claims

1. A method of automatically extracting a contrasting object in a video signal $(s(i,j))$ of a digital image, consisting more specifically on the one hand in estimating (32, 33, 34) in each picture element $(i,j)$ a background value $(f(i,j))$, this estimation providing a first threshold $(S_1)$ referred to as the background estimation threshold which is representative of an image contrast, rendering it possible to assign to the relevant picture element $(i,j)$ a background $(f(i,j))$ estimated in a different way depending on the result of comparing (34) to said first threshold $(S_1)$ a local contrast function $(GR(i,j))$ calculated (33) for the relevant picture element $(i,j)$ and, on the other hand, in comparing (35, 37) in each picture element $(i,j)$ the difference $(d(i,j))$ between the video signal $(s(i,j))$ and the estimated background $(f(i,j))$ to a second threshold $(S_2)$, referred to as the decision threshold which is also representative of an image contrast, in order to decide whether the picture element $(i,j)$ is a candidate picture element of the object to be extracted, characterized in that said local contrast function $(GR(i,j))$ referred to as the recursive gradient, is calculated (33) proportionally to the absolute value of the difference between an average $(MV(j+1))$ of the video signals of picture elements (21) located in a line $(j+1)$ subsequent to the line on which the relevant picture element is located, and a function $(MF(j;j-1))$ of the averages $(MF(j); MF(j-1))$ of the estimated backgrounds in picture elements (23, 24 or 22) located on at least one identical line $(j)$ or a line $(j-1)$ preceding the line $(j)$ on which the relevant picture element $(i,j)$ is located.

2. A method as claimed in Claim 1, characterized in that, on the one hand, if said recursive gradient $(GR(i,j))$ exceeds the background estimation threshold $(S_1)$, the estimated background $(f(i,j))$ for the relevant picture element $(i,j)$ is expressed as a function of the average values $(MF(j); MF(j-1))$ of the estimated backgrounds utilised in the calculation of the recursive gradient, and, on the other hand, if said recursive gradient $(GR(i,j))$ falls short of the background estimation threshold $(S_1)$ the background $(f(i,j))$ estimated for the relevant picture element $(i,j)$ is taken equal to a linear combination of the video signal $(s(i,j))$ of the relevant picture element $(i,j)$ and average values $(MF(j);$

MF(j-1)) of the estimated backgrounds utilised in the calculation of the recursive gradient.

3. A method as claimed in Claim 2, characterized in that if the recursive gradient (GR(i,j) exceeds the background estimation threshold (S$_1$) the background (f(i,j)) estimated for the relevant picture element (i,j) is taken equal to that one of said average values (MF(j); MF(j-1)) of the estimated backgrounds which have the highest difference in absolute value with respect to the video signal (s(i,j)) of the relevant picture element.

4. A method as claimed in one of the Claims 2 or 3, characterized in that if the recursive gradient (GR(i,j)) falls short of the background estimation threshold (S$_1$), the background (f(i,j)) estimated for the relevant picture element (i,j) is taken equal to the average value between the video signal (s(i,j)) of the relevant picture element and that one of said average values (MG-(j); MF(j-1)) of the estimated backgrounds having the smallest difference in absolute value with respect to the video signal (s(i,j)) of the relevant picture element.

5. A method as claimed in any one of the Claims 2 to 4, characterized in that said recursive gradient is calculated, on the one hand, at the left (GRG(i,j)) with the aid of at least one average value (MFG(j)) of the estimated backgrounds in the left-hand picture elements, that is to say preceding the relevant picture element (i,j) and located in the same line (j), and, at the other hand, at the right (GRD(i,j) with the aid of at least one average value (MFD(j)) of the estimated backgrounds in right-hand picture elements, that is to say subsequent to the relevant picture element (i,j) and located in the same line (j), and in that each left-hand recursive gradient (GRG(i,j) and right-hand recursive gradient (GRD(i,j)) defining an estimated background at the left (fg(i,j)) and an estimated background at the right (fd(i,j)), respectively, the final background estimated for the relevant picture element (i,j) is taken equal to that one of these two estimated backgrounds at the left and at the right which has the smallest difference in absolute value with respect to the video signal (s(i,j)) of the relevant picture element (i,j).

6. A method as claimed in any one of the Claims 1 to 5, characterized in that the initialisation of the calculation of said recursive gradient (GR, GRG, GRD) is effected by taking the values of the video signal as the value for the estimated backgrounds for the picture elements located in the first lines and the first and last columns of the image, in these picture elements.

7. A method as claimed in any one of the Claims 1 to 6, characterized in that, the picture being divided into n sub-pictures which overlap each other only partially, the background estimation threshold (S$_1$) and the decision threshold (S$_2$) are proportional to an average value (M) of these n sub-pictures of an average value (m$_k$, k = 1, ..., n) in each sub-picture (k) having a value (C$_k$(i,j)) which is characteristic of the contrast in each of the picture elements (i,j) of the relevant sub-picture (k).

8. A method as claimed in any one of the Claims 1 to 7, characterized in that the relevant video signal (s(i,j)) is the video input level prefiltered by means of a low-pass digital filter (31).

**Ansprüche**

1. Verfahren zur automatischen Extraktion eines kontrastierenden Gegenstandes in einem Video-Signal (s(i,j)) einem digitalen Bildes, das insbesondere aus den folgenden Verfahrensschritten besteht, einerseits, dem Schätzen (32, 33, 34) eines Hintergrundwertes (f(i,j)) in jedem Bildelement (i,j), wobei eine erste Schwelle (S$_1$) benutzt wird, die als Hintergrundschätzungsschwelle bezeichnet wird und für einen Bildkontrast repräsentativ ist, wodurch es möglich ist dem betreffenden Bildelement (i,j) einen je nach dem Ergebnis des Vergleichs (34) einer örtlichen und für das betreffende Bildelement (i,j) berechneten (33) Kontrastfunktion (GR(i,j)) mit der genannten ersten Schwelle (S$_1$), anders geschätzten Hintergrund (f(i,j)) zuzuordnen, und andererseits dem Vergleichen (35, 37) in jedem Bildelement (i,j) der Differenz (d(i,j)) zwischen dem Video-Signal s(i,j) und dem geschätzten Hintergrund (f(i,j)) mit einer zweiten Schwelle (S$_2$), die als Entscheidungsschwelle bezeichnet wird, ebenfalls repräsentativ für einen Bildkontrast, dies um zu entscheiden, ob das Bildelement (i,j) ein potentielles Bildelement des zu extrahierenden Gegenstandes ist, dadurch gekennzeichnet, daß die genannte örtliche Kontastfunktion (GR(i,j)), die als rekursiver Gradient bezeichnet wird, proportional zu dem Absolutwert der Differenz zwischen einem Mittelwert (MV(i,j)) der Video-Signale der Bildelemente (21) auf einer Zeile (j + 1) nach der Zeile, auf der das betreffende Bildelement (i,j) liegt, und einer Funktion (MF(j;j-1)) der Mittelwerte (MF(j); MF(j-1)) der geschätzten Hintergründe in den Bildelementen (23, 24 oder 22) auf mindestens der gleichen Zeile (j) oder einer Zeile (j-1) oder der Zeile (j), auf der das betreffende Bildelement (i,j) liegt, berechnet (33) wird.

2. Verfahren nach Anspruch 1, dadurch gekennzeichnet, daß einerseits, wenn der genannte rekursive Gradient (GR(i,j)) die Hintergrundschätzungsschwelle (S₁) überschreitet, der für das betreffende Bildelement (i,j) geschätzte Hintergrund als Funktion der Mittelwerte (MF(j);MF(j-1)) der geschätzten, bei der Berechnung des rekursiven Gradienten benutzten Hintergründe ausgedrückt wird, und, daß andererseits, wenn der genannte rekursive Gradient (GR(i,j)) die Hintergrundschätzungsschwelle (S₁) unterschreitet, der für das betreffende Bildelement (i,j) geschätzte Hintergrund einer linearen Kombination des Video-Signals (s(i,j)) des betreffenden Bildelementes (i,j) und der Mittelwerte (MF(j);MF(j-1)) der geschätzten, bei der Berechnung des rekursiven Gradienten benutzten Hintergründe entsprechend genommen wird.

3. Verfahren nach Anspruch 2, dadurch gekennzeichnet, daß, wenn der rekursive Gradient (GR(i,j)) die Hintergrundschätzungsschwelle (S₁) überschreitet, der für das betreffende Bildelement (i,j) geschätzte Hintergrund (f(i,j)) demjenigen Mittelwert der genannten Mittelwerte (MF(j);MF(j-1)) der geschätzten Hintergründe entsprechend genommen wird, der den größten Unterschied des Absolutwertes mit dem Video-Signal (s(i,j)) des betreffenden Bildelementes zeigt.

4. Verfahren nach einem der Ansprüche 2 oder 3, dadurch gekennzeichnet, daß, wenn der rekursive Gradient (GR(i,j)) die Hintergrundschätzungsschwelle (S₁) unterschreitet, der für das betreffende Bildelement (i,j) geschätzte Hintergrund (f(i,j)) dem Mittelwert zwischen dem Video-Signal (s(i,j)) des betreffenden Bildelementes und demjenigen Mittelwert der genannten Mittelwerte (MF(j);MF(j-1)) der geschätzten Hintergründe entsprechend genommen wird, der den kleinsten Unterschied des Absolutwertes mit dem Video-Signal (s(i,j)) des betreffenden Bildelementes zeigt.

5. Verfahren nach einem der Ansprüche 2 bis 4, dadurch gekennzeichnet, daß der genannte rekursive Gradient einerseits links (GRG(i,j)) mit Hilfe mindestens eines Mittelwertes (MFG(j)) der geschätzten Hintergründe in den links genannten Bildelementen, d.h. vor dem betreffenden Bildelement (i,j) und auf derselben Zeile (j) liegend, berechnet wird, und andererseits, rechts (GRD(i,j)) mit Hilfe mindestens eines Mittelwertes (MFD(j)) der geschätzten Hintergründe in den rechts genannten Bildelementen, d.h. nach dem betreffenden Bildelement (i,j) und auf derselben Zeile (j) liegend, berechnet wird, und daß jeder der rekursiven Gradienten links (GRG(i,j)) und rechts (GRD(i,j)) einen durch links (fg(i,j)) geschätzten bzw. einen durch rechts (fd(i,j)) geschätzten Hintergrund definieren, wobei der schlußendliche geschätzte Hintergrund für das betreffende Bildelement (i,j) demjenigen Hintergrund dieser zwei durch links und rechts geschätzten Hintergründe entsprechend genommen wird, der den kleinsten Unterschied im Absolutwert mit dem Video-Signal (s(i,j)) des betreffenden Bildelementes (i,j) aufweist.

6. Verfahren nach einem der Ansprüche 1 bis 5, dadurch gekennzeichnet, daß der Anfang der Berechnung des genannten rekursiven Gradienten (GR, GRG, GRD) dadurch erfolgt, daß als Wert der geschätzten Hintergründe für die Bildelemente auf den ersten Zeilen und auf den ersten und letzten Spalten des Bildes die Werte der Video-Signale in diesen Bildelementen selbst genommen werden.

7. Verfahren nach einem der Ansprüche 1 bis 6, dadurch gekennzeichnet, daß, wobei das Bild in n Hilfsbilder aufgeteilt ist, die sich höchstens teilweise überdecken, die Hintergrundschätzungsschwelle (S₁) und die Entscheidungsschwelle (S₂) proportional sind an dem Mittelwert (M) über diesen n Hilfsbildern mit der Mittelwerte (m_k, k = 1,...,n) in jedem Hilfsbild (k) einer kennzeichnenden Größe (C_k(i,j)) des Kontrastes in jedem der Bildelemente (i,j) des betreffenden Hilfsbildes (k).

8. Verfahren nach einem der Ansprüche 1 bis 7, dadurch gekennzeichnet, daß das betreffende Video-Signal (s(i,j)) der mit Hilfe eines digitalen Tiefpaßfilters (31) vorgefilterte Video-Eingangspegel ist.

FIG.1

FIG.2

FIG.3

FIG.4